# DEMANDE DE BREVET EUROPEEN

(11) **EP 1 245 959 A1**
(43) Date de publication de la demande: **02.10.2002**
(21) Numéro de dépôt: 02290730.7
(22) Date de dépôt: 22.03.2002
(51) Int. Cl.: G01P 3/44

(54) **Ensemble formant palier à roulement équipé d'un dispositif capteur d'informations**

(30) Priorité: 28.03.2001 FR 0104178
(71) Demandeur: SNR ROULEMENTS, F-74010 Annecy (FR)
(72) Inventeur: Chambert, Olivier, 74960 Cran-Gevrier (FR)
(74) Mandataire: Geismar, Thierry

(57) **Abrégé**

Ensemble formant palier à roulement (1) équipé d'un dispositif capteur d'informations comprenant un codeur (6) générateur d'impulsions magnétiques et un capteur (7) muni d'au moins deux éléments sensibles (8) aptes à détecter ces impulsions, ledit ensemble comprenant :
- une fusée fixe (2) comprenant un alésage axial (22) ;
- une bague extérieure tournante (3) présentant, du coté externe de l'ensemble, un logement annulaire (17) saillant coaxialement par rapport audit alésage (22) ; et
- des corps roulants (4) disposés entre la fusée (2) et la bague extérieure (3) ; dans lequel, en combinaison :
   - le codeur (6) est associé sur une face latérale interne d'un bouchon (18) qui est disposé dans le logement (17) ;
   - le capteur (7) est disposé dans l'alésage (22), en appui sur une surface latérale externe de la fusée (2).

## Description

L'invention concerne un ensemble formant palier à roulement équipé d'un dispositif capteur d'informations comprenant un codeur générateur d'impulsions magnétiques qui est associé à une partie tournante et un capteur fixe qui est muni d'au moins deux éléments sensibles aptes à détecter ces impulsions.

De tels ensembles, lorsqu'ils sont équipés d'un dispositif capteur de vitesse de rotation, de positon angulaire et/ou de sens de rotation, peuvent notamment être employés pour les roues de véhicules automobiles qui sont pourvus de système anti-blocage desdites roues. En effet, les informations sont alors utilisées par un calculateur d'assistance au freinage.

On connaît déjà des paliers à roulement équipés d'un dispositif capteur d'informations.

Un des problèmes qui se pose avec de tels paliers est leur protection vis-à-vis de la pollution du milieu environnant, et notamment la protection du codeur générant les impulsions magnétiques lues par le capteur.

Dans le cas d'un dispositif capteur d'informations de type électrique, le document EP-0 498 299 propose de résoudre ce problème en utilisant une paire d'obturateurs sur l'un desquels est associée une roue phonique.

Mais, outre que ce montage n'est pas transposable à une technologie de type magnétique, il présente l'inconvénient de nécessiter beaucoup de pièces pour sa réalisation. De plus, le concentrateur de flux est associé à la bague fixe ce qui complique le montage en n'isolant pas la fonction mesure des contraintes de roulement.

Dans le cas d'un dispositif capteur d'informations de type magnétique, le document EP-0 326 454 propose un montage de roulement à palier comprenant un disque portant le codeur qui tourne devant un capteur associé à un autre disque.

Ce montage présente notamment l'inconvénient de prévoir que le disque porte capteur serve à bloquer axialement la bague intérieure, ce qui impose un dimensionnement et des matériaux adéquats. De plus, la disposition du capteur sur ce disque rigide nécessite une opération supplémentaire de montage qui doit être réalisée de façon précise pour obtenir un bon contrôle de l'entrefer. Il en résulte que ce montage est difficilement réalisable dans le cadre des cadences en vigueur dans l'industrie automobile.

L'invention vise donc notamment à remédier à ces inconvénients en proposant un ensemble formant palier à roulement qui soit simple de montage tout en assurant d'une part une protection efficace du palier vis-à-vis du milieu environnant et d'autre part un bon contrôle de l'entrefer.

En outre, dans l'ensemble proposé, la fonction mesure est totalement dissociée des contraintes de roulement.

A cet effet, l'invention propose un ensemble formant palier à roulement équipé d'un dispositif capteur d'informations comprenant un codeur générateur d'impulsions magnétiques et un capteur muni d'au moins deux éléments sensibles aptes à détecter ces impulsions, ledit ensemble comprenant :
- une fusée fixe comprenant un alésage axial ;
- une bague extérieure tournante présentant, du coté externe de l'ensemble, un logement annulaire saillant coaxialement par rapport audit alésage ; et
- des corps roulants disposés entre la fusée et la bague extérieure ;
dans lequel, en combinaison :
- le codeur est associé sur une face latérale interne d'un bouchon qui est disposé dans le logement ;
- le capteur est disposé dans l'alésage, en appui sur une surface latérale externe de la fusée, de sorte à disposer les éléments sensibles en regard et à distance d'entrefer du codeur.

D'autres objets et avantages de l'invention apparaîtront au cours de la description qui suit, faite en référence aux dessins annexés, dans lesquels :
- la figure 1 représente, en coupe longitudinale, un ensemble formant palier à roulement selon un premier mode de réalisation ;
- la figure 2 représente, en coupe longitudinale, un ensemble formant palier à roulement selon un deuxième mode de réalisation ;
- la figure 3 représente, en coupe longitudinale, un ensemble formant palier à roulement selon un troisième mode de réalisation.

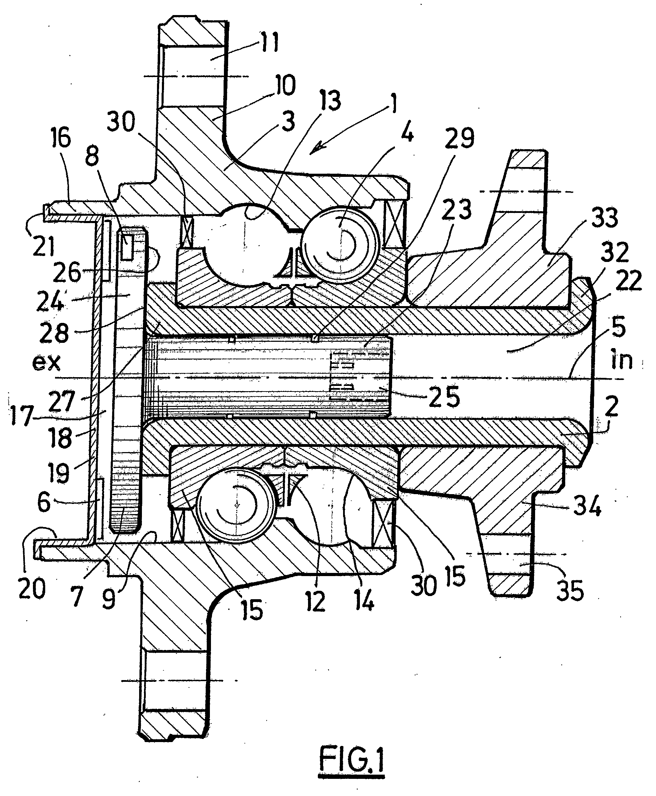

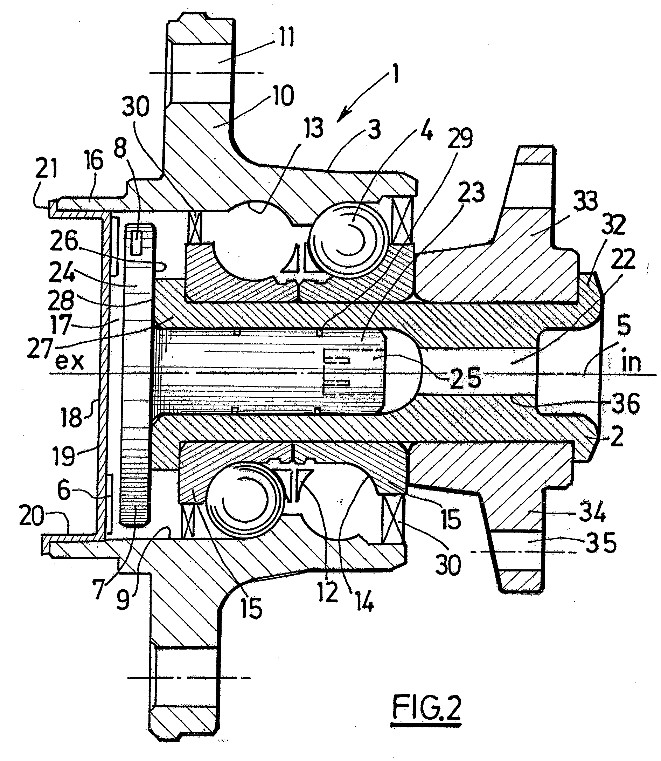

Sur les figures 1 à 3 est représenté un ensemble comportant un palier à roulement 1 comprenant une fusée fixe 2, une bague extérieure tournante 3 et des corps roulants 4 disposés entre elles afin de permettre la rotation relative de ces deux pièces 2, 3 autour d'un axe 5. Un palier du type représenté sur les figures 1 et 2 est par exemple décrit dans la demande FR-00 09176 issue de la demanderesse.

Lorsque l'on veut connaître la vitesse de rotation, le sens de déplacement et/ou la position angulaire de la bague tournante 3 par rapport à la fusée 2, il est connu d'utiliser un dispositif capteur d'informations comprenant un codeur 6 générateur d'impulsions magnétiques associé à la bague tournante 3 et, associé à la fusée 2, un capteur 7 muni d'au moins deux éléments sensibles 8 aptes à détecter ces impulsions.

Dans la description, les termes « supérieur » et « inférieur » sont définis par rapport à un plan respectivement opposé et en regard de l'axe 5, les termes « axial » ou « transversal » sont définis par rapport à un plan parallèle à l'axe 5, les termes « radial » ou « latéral » sont définis par rapport à un plan perpendiculaire à l'axe 5.

La bague tournante 3 comprend un alésage 9 et un flasque 10 agencé pour permettre l'association d'un disque de frein et d'une jante de roue d'un véhicule automobile (non représentés) sur ladite bague tournante 3. A cet effet, le flasque 10 est pourvu de trous de fixation 11 circonférentiellement répartis sur sa surface de sorte à pouvoir réaliser l'association au moyen de vis ou de boulons.

Dans les modes de réalisation représentés sur les figures, le roulement est assuré par deux rangées de billes 4 qui sont maintenues à équidistance respectivement par des cages 12.

Toutefois, et en fonction des contraintes d'utilisation, on peut prévoir d'utiliser un nombre de rangées de billes 4 différent et/ou d'utiliser des corps roulants 4 différents, par exemple sous forme de rouleaux ou d'aiguilles.

Pour recevoir les billes 3, deux chemins de roulements 13 sont réalisés sur la surface de l'alésage. Ces deux chemins 13 sont décalés axialement par rapport au flasque 10 afin de faciliter la réalisation de la bague 3 tout en assurant une meilleure résistance mécanique.

Par ailleurs, dans les modes de réalisation représentés sur les figures 1 et 2, chaque rangée de billes 4 roule sur un chemin de roulement 14 qui est réalisé sur la surface transversale supérieure d'une bague intérieure fixe 15.

Comme il sera décrit par la suite, les deux bagues intérieures 15 sont emmanchées sur la surface supérieure de la fusée 2 avec les chemins de roulement 13, 14 disposés respectivement en regard.

Bien que la réalisation décrite ci-dessus permette d'éviter l'usinage des chemins de roulement 14 directement sur la surface supérieure de la fusée 2, on peut toutefois prévoir un palier 1 dépourvu de bague intérieure 15 afin de limiter le nombre de pièces à assembler.

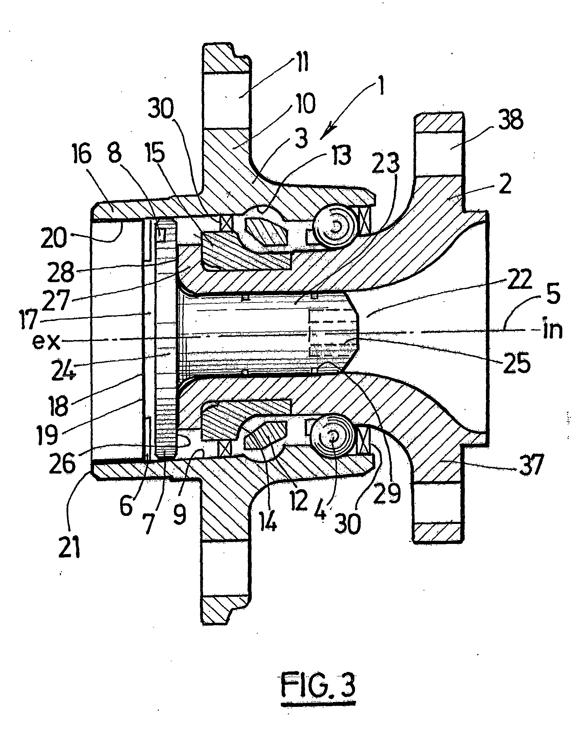

Dans le mode de réalisation représenté sur la figure 3, le palier comprend une bague intérieure 15 et le chemin de roulement de la deuxième rangée de billes est usiné directement sur la surface supérieure de la fusée 2.

La bague tournante 3 comprend en outre une saillie annulaire axiale 16 qui s'étend du coté externe de l'ensemble afin de former un logement 17 coaxial qui est en communication avec l'alésage 9.

Dans la description les termes « externe » et « interne » sont définis par rapport aux indices ex et in placés sur les figures, c'est à dire par rapport au coté situé respectivement vers l'extérieur et vers l'intérieur du véhicule.

Comme on peut le voir sur les figures, l'encombrement axial de ce logement 17 est relativement faible ce qui permet d'obtenir un ensemble compact.

Le logement 17 est destiné à recevoir, par exemple par emmanchement ou analogues, un bouchon 18 qui a pour fonction d'une part de porter le codeur 6 et d'autre part d'éviter la contamination de l'ensemble par les polluants extérieurs (eau, boues, ...).

Dans un exemple particulier, le codeur 6 est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.

Selon une réalisation, le bouchon 18 comprend un disque plein 19 portant le codeur 6, une portée cylindrique axiale 20 de diamètre sensiblement identique à celui du logement 17 et un épaulement annulaire 21 s'étendant radialement depuis ladite portée 20.

Ainsi, l'association du codeur 6, du fait qu'elle est réalisée sur une surface plane, est facile à réaliser par exemple par collage.

En outre, la portée cylindrique 20 permet un emmanchement à force du bouchon 18 sur la bague extérieure 3. Ce montage permet d'assurer d'une part l'étanchéité et d'autre part la mise en rotation du codeur 6 conjointement avec la bague extérieure 3.

Par ailleurs, le bouchon 18 peut être réalisé de façon monobloc, par exemple par découpage d'une tôle ou par moulage d'un matériau polymère, sans contrainte de résistance mécanique sévère puisqu'il ne subit pas les efforts de roulement.

L'épaulement 21, en venant en butée contre l'extrémité de la bague extérieure 3, permet d'effectuer un positionnement précis du codeur 6 dans un plan radial déterminé.

On décrit ci-dessous la disposition des éléments sensibles 8 du capteur 7 en regard et à distance d'entrefer de ce plan radial.

Dans un exemple particulier, le capteur 7 comprend au moins deux éléments sensibles 8, par exemple une pluralité d'éléments sensibles 8 alignés, qui sont choisis parmi les sondes à effet Hall, les magnétorésistances, les magnétorésistances géantes. De façon connue, de tels éléments 8 sont aptes à détecter les impulsions magnétiques générées par le codeur 6.

La fusée 2 comprend un alésage axial 22 qui est destiné à recevoir le capteur 7 d'un dispositif capteur d'informations, telles que la vitesse de rotation, le sens de rotation et/ou la position angulaire de la bague tournante 3 par rapport à la fusée fixe 2.

Ce type d'informations, après traitement électronique, est classiquement utilisé dans des systèmes d'anti-blocage des roues ou dans d'autres systèmes d'aide à la conduite.

La forme et la taille de l'alésage 22 sont agencées pour permettre la disposition du capteur 7, notamment avec les faces transversales supérieures du capteur 7 qui viennent en contact avec la surface de l'alésage 22.

Dans les modes de réalisation représentés sur les figures, l'alésage 22 est cylindrique et le capteur 7 comprend une partie de base cylindrique 23 afin de permettre son ajustement à l'intérieur de l'alésage 22.

Le capteur 7 comprend en outre une partie d'extrémité 24 coaxiale au roulement qui est réalisée sous la forme d'un disque plein saillant radialement de la partie de base 23.

Dans un exemple particulier, le capteur 7 est réalisé de façon monobloc et modulable, par exemple par moulage d'un matériau plastique, avec les moyens de connexion 25 dudit capteur 7 disposés dans la partie de base 23 et les éléments sensibles 8 disposés au voisinage de la périphérie externe de la partie d'extrémité 24.

En effet, le capteur 7 ne subissant aucun effort de roulement, il peut être réalisé sans contrainte de résistance mécanique sévère.

Dans cette réalisation, la face interne 26 du disque 24 vient en butée sur la surface latérale externe de la fusée 2 afin d'assurer un positionnement précis des éléments sensibles 8 par rapport au codeur 6.

Plus particulièrement, et pour améliorer encore la précision du positionnement, l'extrémité externe de la fusée 2 comprend un épaulement annulaire 27.

Dans les modes de réalisation représentés sur les figures 1 et 2, l'épaulement 27 est réalisé par usinage de la fusée et sa face latérale externe 28 est également usinée pour recevoir le disque 24.

Cette réalisation permet d'une part d'augmenter la taille de la surface d'appui 28 pour améliorer la stabilité du capteur 7 et d'autre part de pouvoir usiner précisément ladite surface 28 de sorte à augmenter la précision du positionnement des éléments sensibles 8 dans un plan radial situé à distance d'entrefer du codeur 6.

Dans le mode de réalisation représenté sur la figure 3, l'épaulement 27 est réalisé par repoussement de matière de sorte à éviter l'étape ultérieure d'usinage de sa face latérale externe tout en gardant une bonne précision du positionnement des éléments sensibles 8 dans un plan radial situé à distance d'entrefer du codeur 6.

Par ailleurs, la partie de base 23 s'étendant à l'intérieur de l'alésage 22 avec les moyens de connexion 25 disposés à l'opposé de la partie d'extrémité 24, on peut recueillir facilement et vers l'intérieur du véhicule les informations délivrées par le capteur 7.

En outre, la disposition du capteur 7 dans l'alésage 22, sur une distance relativement importante, permet un centrage précis des éléments sensibles 8 par rapport à l'axe de rotation du palier 1.

Il apparaît de la description faite ci-dessus que, en combinant l'épaisseur du disque 24 et la longueur de la portée 20, on peut ajuster de façon simple et très précise l'entrefer en fonction de la géométrie du palier 1.

En outre, l'ensemble permet d'obtenir une étanchéité optimale pour le palier 1.

En effet, et comme décrit ci-dessus, le bouchon 18 permet d'isoler le palier 1 de l'extérieur de l'ensemble.

Mais le capteur 7 a également une fonction d'étanchéité puisque, en obstruant l'alésage 22, il isole le palier 1 des polluants provenant du coté intérieur. Pour améliorer cette étanchéité, des joints toriques 29 peuvent être disposés sur la surface de la partie de base 23. En outre, ces joints 29 permettent d'améliorer le maintien du capteur 7 à l'intérieur de l'alésage 22.

Le palier 1 comprend également des moyens d'étanchéité propres qui sont formés, coté intérieur et coté extérieur, par respectivement un joint 30 disposé entre la bague extérieure 3 et une bague intérieure 15 (figure 1 et 2).

Dans le mode de réalisation de la figure 3, un joint 30 est disposé entre la bague extérieure 3 et la fusée 2 et un deuxième joint 30 est disposé entre la bague extérieure 3 et la bague intérieure 15.

Ainsi, le dispositif capteur d'informations étant protégé de la graisse, on n'est pas obligé de réaliser le capteur 7 et/ou le codeur 6 dans des matériaux compatibles avec ladite graisse.

Dans les modes de réalisation représentés sur les figures 1 et 2, l'extrémité interne de la fusée 2 comprend un épaulement annulaire radial 32, formé par exemple par repoussement de matière. L'épaulement 32 est agencé pour permettre, de façon indémontable, le blocage axial des deux bagues intérieures 15 et d'un support fixe 33 entre les deux épaulements 27, 32.

Cet épaulement 32 est décalé axialement des bagues 15, 3 du roulement afin de limiter les répercussions dues aux efforts de repoussement de la matière.

Le support fixe 33 comporte un flasque 34 pourvu de trous de fixation 35 agencés pour assurer la fixation de l'ensemble par vissage ou boulonnage par exemple sur un élément de suspension d'un véhicule automobile.

Dans le mode de réalisation représenté sur la figure 1, le diamètre de l'alésage 22 est sensiblement constant sur toute sa longueur. Cette structure tubulaire permet en outre d'obtenir un gain de poids non négligeable pour l'ensemble.

Dans le mode de réalisation représenté sur la figure 2, un renfort 36 diminuant localement le diamètre de l'alésage axial 22 est prévu sous le support fixe 33 afin de rigidifier la fusée 2, tout en gardant un poids faible.

Dans le mode de réalisation représenté sur la figure 3, la fusée 2 est réalisée en une seule pièce et intègre un flasque 37 pourvu de trous de fixation 38 agencés pour assurer la fixation de l'ensemble par vissage ou boulonnage par exemple sur un élément de suspension d'un véhicule automobile

L'ensemble qui vient d'être décrit est dit « prêt à l'emploi » en ce qu'il possède ces caractéristiques de fonctionnement, notamment en termes de jeu de fonctionnement et d'angle de contact, dès la sortie des lignes de fabrication, en particulier il ne nécessite pas de réglage lors du montage sur le véhicule.

En outre, il permet, en utilisant un nombre de pièces limité et en permettant de réaliser un dispositif capteur d'informations sans tenir compte des efforts de roulement, de combiner une étanchéité optimale avec un contrôle précis de l'entrefer.

## Revendications

1. Ensemble formant palier à roulement (1) équipé d'un dispositif capteur d'informations comprenant un codeur (6) générateur d'impulsions magnétiques et un capteur (7) muni d'au moins deux éléments sensibles (8) aptes à détecter ces impulsions, ledit ensemble comprenant :
- une fusée fixe (2) comprenant un alésage axial (22) ;
- une bague extérieure tournante (3) présentant, du coté externe de l'ensemble, un logement annulaire (17) saillant coaxialement par rapport audit alésage (22); et
- des corps roulants (4) disposés entre la fusée (2) et la bague extérieure (3) ;
ledit ensemble étant **caractérisé en ce que**, en combinaison :
- le codeur (6) est associé sur une face latérale interne d'un bouchon (18) qui est disposé dans le logement (17);
- le capteur (7) est disposé dans l'alésage (22), en appui sur une surface latérale externe de la fusée (2), de sorte à disposer les éléments sensibles (8) en regard et à distance d'entrefer du codeur (6).

2. Ensemble selon la revendication 1, **caractérisé en ce que** l'extrémité externe de la fusée (2) comprend un épaulement annulaire radial (27).

3. Ensemble selon la revendication 1 ou 2, **caractérisé en ce que** le capteur (7) comprend une partie de base (23) dont la forme et la taille permettent un ajustement de ladite partie de base (23) à l'intérieur de l'alésage (22), et une partie d'extrémité (24) en forme de disque saillant radialement de ladite partie de base (23).

4. Ensemble selon la revendication 3, **caractérisé en ce que** le capteur (7) est réalisé de façon monobloc avec les moyens de connexion (25) dudit capteur (7) disposés dans la partie de base (23) et les éléments sensibles (8) disposés au voisinage de la périphérie externe de la partie d'extrémité (24).

5. Ensemble selon la revendication 3 ou 4, **caractérisé en ce que** des joints toriques (29) sont disposés sur la surface de la partie de base (23) de sorte à assurer l'étanchéité de l'ensemble vis-à-vis du coté intérieur.

6. Ensemble selon l'une quelconque des revendications 1 à 5, **caractérisé en ce que** le bouchon (18) est monobloc et comprend un disque plein (19) portant le codeur (6), une portée cylindrique axiale (20) de diamètre sensiblement identique à celui du logement (17) et un épaulement annulaire (21) s'étendant radialement depuis ladite portée (20).

7. Ensemble selon l'une quelconque des revendications 1 à 6, **caractérisé en ce que** les éléments sensibles (8) sont choisis parmi les sondes à effet Hall, les magnétorésistances, les magnétorésistances géantes.

8. Ensemble selon l'une quelconque des revendications 1 à 7, **caractérisé en ce que** le codeur (6) est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.

9. Ensemble selon l'une quelconque des revendications 2 à 8, **caractérisé en ce que** l'extrémité interne de la fusée (2) comprend un épaulement annulaire radial (32), et **en ce qu'**un support fixe (33) et au moins une bague intérieure fixe (15) est emmanchée sur la fusée (2), entre les deux épaulements (27, 32).

10. Ensemble selon la revendication 9, **caractérisé en ce qu'**un renfort (36) diminuant localement le diamètre de l'alésage (22) est prévu sous le support fixe (33) de sorte à rigidifier la fusée (2).

11. Ensemble selon la revendication 1 à 8, **caractérisé en ce que** la fusée (2) est monobloc et intègre des moyens de fixation (37, 38) de l'ensemble.
